# FASCICULE DE BREVET EUROPEEN

(11) **EP 1 074 099 B1**
(45) Date de publication et mention de la délivrance du brevet: **05.02.2003**
(21) Numéro de dépôt: 99914636.8
(22) Date de dépôt: 21.04.1999
(51) Int. Cl.: H04B 7/26, H04L 12/28

(54) **PROCEDE DE TRANSMISSION DANS UN RESEAU DE COMMUNICATION DOMESTIQUE COMPORTANT UN CANAL SANS FIL**
VERFAHREN ZUR ÜBERTRAGUNG IN EINEM HAUSKOMMUNIKATIONSNETZ MIT EINEM DRAHTLOSEN KOMMUNIKATIONSKANAL
TRANSMISSION METHOD IN A DOMESTIC COMMUNICATION SYSTEM COMPRISING A WIRELESS CHANNEL

(30) Priorité: 21.04.1998 FR 9804983
(43) Date de publication de la demande: 07.02.2001
(73) Titulaire: THOMSON multimedia, 92100 Boulogne Billancourt (FR)
(72) Inventeur: DORE, Renaud Thomson Multimedia, F-92648 Boulogne Cedex (FR); DEMOULIN, Vincent Thomson Multimedia, F-92648 Boulogne Cedex (FR); STRAUB, Gilles Thomson Multimedia, F-92648 Boulogne Cedex (FR); LOPEZ, Patrick Thomson Multimedia, F-92648 Boulogne Cedex (FR)
(74) Mandataire: Kohrs, Martin
(86) Numéro de dépôt international: FR9900945
(87) Numéro de publication internationale: WO99055021

(56) Documents cités:
- EP-A- 0 681 406
- DUNLOP J: "A RESERVATION BASED ACCESS MECHANISM FOR 3RD GENERATION CELLULAR SYSTEMS" ELECTRONICS AND COMMUNICATION ENGINEERING JOURNAL, vol. 5, no. 3, 1 juin 1993 (1993-06-01), pages 180-186, XP000377795 ISSN: 0954-0695

## Description

L'invention a pour objet un procédé de transmission dans un réseau de communication dans lequel au moins certaines connexions sont de type 'sans fil'. L'invention s'applique en particulier dans le domaine des réseaux de communication domestiques.

Dans un réseau de communication domestique, plusieurs types d'équipements multimédia peuvent cohabiter. Certains de ces équipements peuvent être reliés entre eux par l'intermédiaire de câbles. Ils constituent alors un groupe câblé. Un réseau de communication domestique peut comporter plusieurs groupes câblés. Un réseau de communication domestique comportant plusieurs groupes câblés peut comporter également des liaisons sans fil. Ces liaisons sans fil sont destinées à relier les groupes câblés les uns aux autres. Le nombre de liaisons sans fil doit être suffisant pour que chaque groupe câblé soit relié à au moins un autre groupe câblé.

La communication par liaison sans fil peut être constituée simplement par une liaison entre deux équipements en mode dit 'point à point'. Mais plus généralement, il peut y avoir plusieurs liaisons point à point simultanées dans le même réseau domestique. D'une façon plus générale encore, ces liaisons sans fil peuvent constituer ensemble ce qu'on appelle un pont en terminologie réseau, c'est-à-dire un ensemble de liaisons 'multipoint-multipoint' permettant l'interconnexion de bus câblés du type IEEE1394-1995.

L'ensemble des liaisons sans fil constitue le réseau de communication sans fil domestique. Les groupes câblés du réseau de communication domestique constituent les éléments du réseau de communication domestique.

Pour des raisons de propagation en milieu domestique, il est possible que certaines liaisons sans fil entre divers éléments du réseau de communication sans fil domestique ne puissent pas être établies. Par conséquent, au sein du réseau de communication sans fil domestique, il se peut que certains éléments ne soient pas reliés à tous les autres. Un tel réseau est dit à connectivité incomplète.

La bande passante disponible est une ressource limitée et doit être utilisée de la façon la plus efficace possible. On entend par utilisation efficace de fréquence tout schéma d'allocation de fréquence qui minimise notamment la transmission de données de service, comme par exemple des données servant à la coordination des membres (appareils) du réseau.

L'invention a pour but de proposer un procédé d'accès au canal sans fil efficace.

L'invention a pour objet un procédé de transmission dans un réseau de transmission comportant des appareils connectés au réseau, au moins certains appareils étant reliés par au moins une liaison sans fil, caractérisé en ce que :
- les communications sans fil sont effectuées selon un protocole de type TDMA isochrone, dans lequel une trame est divisée en fenêtres temporelles attribuées sur réservation à des appareils,
- l'attribution d'une fenêtre d'une trame à un appareil étant telle qu'elle peut être déduite par tout appareil du nombre de fenêtres réservées par trame par chaque appareil et d'au moins un autre paramètre qui identifie l'appareil qui a effectué la demande.

L'attribution des fenêtres d'une trame est effectuée selon une méthode non-équivoque connue de chaque appareil du réseau, qui peut ainsi connaître cette attribution à l'aide d'un minimum de paramètres.

Selon un mode de réalisation particulier, chaque trame comporte une fenêtre de contrôle par appareil relié à la partie sans fil du réseau, la position et l'ordre des fenêtres de contrôle dans chaque trame étant connus par tous les appareils de cette partie sans fil du réseau.

Selon un mode de réalisation particulier, les fenêtres de contrôle sont réparties dans la trame et les positions de ces fenêtres sont identiques à chaque trame.

Selon un mode de réalisation particulier, la position des fenêtres de contrôle dans une trame est déterminée suite à une réinitialisation du réseau, par exemple suite à la connexion ou à la déconnexion d'un appareil du réseau.

Un changement de topologie induit une modification de l'attribution des fenêtres dans une trame. Cette information doit par conséquent également être diffusée.

Selon un mode de réalisation particulier, lors de l'enregistrement d'un appareil dans le réseau, un numéro d'ordre lui est attribué, l'ordre des fenêtres de contrôle étant déduit de l'ordre des numéros attribués aux appareils du réseau. Dans le mode de réalisation de l'invention, ce numéro est "l'adresse physique" d'un appareil.

Selon un mode de réalisation particulier, la fenêtre de contrôle d'un appareil comporte le cas échéant un paquet de données de réservation de fenêtres.

Selon un mode de réalisation particulier, un appareil recevant un paquet de données relatif à une réservation l'inclut dans sa prochaine fenêtre de contrôle.

Les informations de réservation sont ainsi propagées de proche en proche à tous les appareils du réseau.

Selon un mode de réalisation particulier, à chaque changement de topologie du réseau, chaque appareil transmet une signalisation de type écho dans sa fenêtre de contrôle, ladite signalisation étant destinée à être diffusée dans le réseau et à être renvoyée par chacun des autres appareils, l'appareil ayant émis la signalisation déterminant à partir des renvois de la signalisation par les autres appareils la durée de diffusion de sa demande de réservation dans le réseau.

On entend par changement de topologie du réseau la connexion ou la déconnexion d'un appareil connecté à la partie sans fil du réseau. Un appareil apprend grâce à la méthode ci-dessus le temps nécessaire à une de ses trames pour atteindre tous les appareils du réseau.

Selon un mode de réalisation particulier, un appareil ayant émis une demande de réservation de fenêtres ne met en oeuvre cette réservation qu'après une durée correspondant à la durée de diffusion de ses données de contrôle dans le réseau.

Selon un mode de réalisation particulier, une trame comporte en outre un intervalle de temps dont l'utilisation est régie par un procédé contentieux et réservé à une transmission asynchrone.

D'autres caractéristiques et avantages de l'invention apparaîtront à travers la description d'un exemple de réalisation non limitatif illustré par les figures parmi lesquelles :
- la figure 1 représente schématiquement un exemple d'un réseau de communication dans lequel le procédé conforme au présent exemple est mis en oeuvre,
- la figure 2a est un diagramme illustrant un exemple de répartition de fenêtres dans une trame TDMA,
- la figure 2b est un diagramme représentant le niveau de puissance reçu par un premier appareil de la figure 1 pour chaque fenêtre de la trame de la figure 2a,
- la figure 2c est un diagramme représentant le niveau de puissance reçu par un second appareil de la figure 1 pour chaque fenêtre de la trame de la figure 2a,
- la figure 3 représente schématiquement la répartition de fenêtres comportant des données de service et de fenêtres comportant des données utiles dans une trame,
- la figure 4 représente schématiquement plusieurs trames successives illustrant la propagation d'une mise à jour de l'attribution des fenêtres dans le réseau de la figure 1.

Dans un réseau de communication sans fil domestique dont les éléments comprennent des équipements domestiques multimédia tels que décodeurs numériques de télévision, moniteurs vidéo, enregistreurs DVD ou DVC, chaînes audio, ordinateurs, imprimantes ou encore accès au réseau téléphonique commuté, le débit à transmettre est dimensionné par le format DV (IEC 1083) pouvant atteindre les 40 Mbit/s. D'autre part, dans un tel réseau, il est difficile d'attribuer à un élément particulier le rôle de maître, c'est à dire qu'aucun élément ne possède une fonction prépondérante qui peut justifier l'attribution de ce rôle. Un élément maître est un élément qui possède un pouvoir de décision qu'il peut appliquer sur tous les autres éléments du réseau.
Le réseau de communication sans fil domestique envisagé est donc un réseau construit selon une architecture de type distribuée, c'est à dire sans élément maître.

Un premier mécanisme connu en soi auquel on pourrait penser pour gérer l'accès d'un appareil au canal est le mécanisme dit 'FDMA' pour 'Frequency Division Multiplex Access' en langue anglaise. Ce mécanisme revient à séparer la bande en autant de sous-bandes qu'il y a de liaisons possibles. Cependant, dans un réseau domestique, la puissance reçue par un appareil du réseau varie selon l'appareil émetteur, étant donné que l'emplacement des appareils est de nature aléatoire dans les pièces de l'habitation. Les distances entre appareils sont de ce fait variables, ainsi que l'atténuation des signaux introduite par des obstacles tels des murs ou des meubles. Aussi, dans un réseau utilisant le mécanisme FDMA, chaque sous-bande pourrait être reçue par un même appareil avec des niveaux tellement disparates que l'extraction par filtrage d'une sous-bande devient impossible, à moins d'augmenter l'espacement entre sous-bande et de diminuer la bande passante globale.

Un second mécanisme consiste dans le partage du canal par utilisation d'un code d'étalement orthogonal - mécanisme dit 'CDMA' pour 'Code Division Multiplex Access' en langue anglaise. Les débits utiles visés de l'ordre de 40 Mbits nécessiteraient une bande d'étalement de fréquence supérieure à 100 MHz, ce qui est incompatible avec l'état de l'art actuel.

Le mécanisme implémenté par l'invention est le mécanisme de partage dans le temps - ou 'TDMA' pour Time Division Multiplex Access en langue anglaise- où chaque appareil prend possession de la bande passante totale pendant un intervalle de temps appelé 'fenêtre'. La prise de parole, c'est-à-dire l'accès au canal est alors déterminée par une trame sur laquelle tous les membres du réseau sont synchronisés. Ce mécanisme TDMA est souple en ce que le débit de chaque liaison est déterminé par la proportion de fenêtres qui lui est allouée. Plus le nombre de fenêtres par trame est grand, plus le débit de chaque liaison peut être défini de façon fine. En pratique, la trame TDMA est découpée en fenêtres de données utiles et de contrôle pour chaque appareil du réseau. Les fenêtres de contrôle véhiculent entre autres les informations nécessaires pour déterminer l'attribution des fenêtres à chaque appareil du réseau sans fil, c'est-à-dire l'identité des sources d'émission pour chaque fenêtre.

Dans le réseau domestique, différentes liaisons peuvent coexister simultanément entre les appareils. Le débit affecté à chaque liaison peut être variable: telle liaison entre un magnétoscope et un moniteur peut occuper 8 Mbit/s et telle autre entre le décodeur numérique et un ordinateur personnel peut n'occuper que 1 Mbit/s. La configuration des liaisons peut changer au gré des établissements et des interruptions. Certaines liaisons possèdent un débit maximal constant et connu par l'avance (notamment lorsqu'elles transportent un flux audio vidéo), d'autres sont à débit variable et non prévisible (par exemple en cas de transfert de fichier). Il s'ensuit que le schéma d'allocation de fenêtres est susceptible de changer pour chaque trame.

La qualité de la liaison radio entre deux appareils quelconques du réseau peut être très variable. Cette qualité peut être telle qu'une liaison donnée peut devoir être considérée comme inexistante. D'autre part, la liaison de tout appareil du réseau avec tout autre appareil de ce réseau ne se justifie par forcément. Connecter deux moniteurs peut, dans un contexte donné, ne pas présenter un intérêt justifiant la création d'une liaison. Etant donné l'existence potentielle de liaisons défectueuses entre au moins certains appareils, même les appareils qui ne peuvent pas communiquer doivent se coordonner pour accéder au canal sans fil, c'est-à-dire qu'ils doivent être synchronisés sur la même trame TDMA. On se trouve donc confronté au problème consistant à diffuser une même trame TDMA - c'est-à-dire sa structure et sa position - sur un réseau à connectivité incomplète.

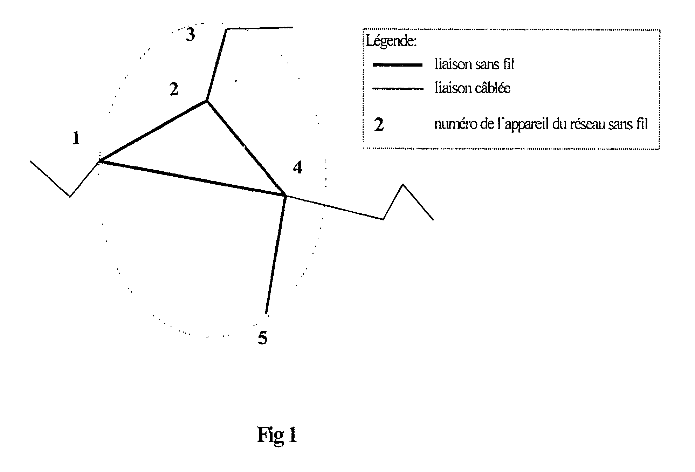

La figure 1 illustre un réseau selon le présent exemple de réalisation dans lequel ces problèmes peuvent exister : Cinq appareils, numérotés de 1 à 5, sont reliés par une transmission sans fil de la manière suivante (Table 1):

**Table 1**

| **Appareil** | **Liaison sans fil** |
|---|---|
| 1 | 2 - 4 |
| 2 | 1-3-4 |
| 3 | 2 |
| 4 | 1 - 2 - 5 |
| 5 | 4 |

Des liaisons par câble (traits fins) existent entre les appareils 1, 2 et 4 et d'autres appareils non illustrés. On notera à titre d'exemple qu'aucune liaison sans fil n'est possible entre les appareils 1 et 5.

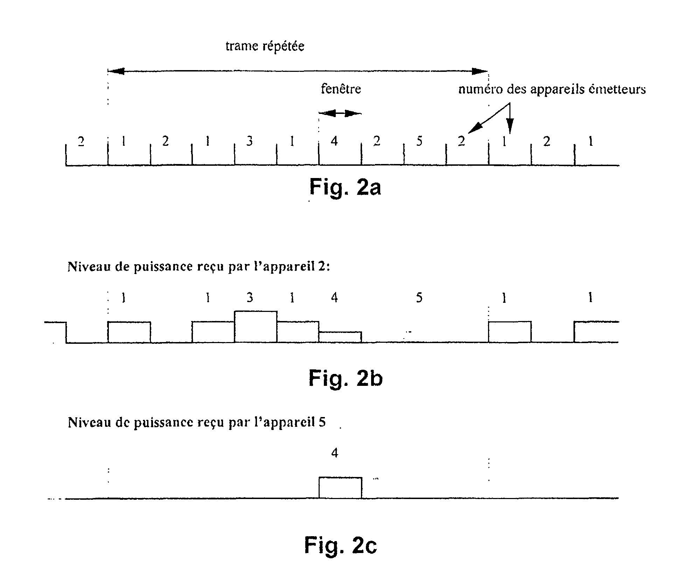

La figure 2a illustre une répartition des fenêtres d'une trame (qui comporte neuf de fenêtres) dans le cas du réseau de la figure 1. La figure 2b illustre la puissance reçue dans chaque fenêtre, vu de l'appareil 2. La puissance reçue de l'appareil 5 (en pointillés) est trop faible pour que le signal puisse être exploité. La figure 2c illustre la puissance reçue par l'appareil 5 : ce dernier ne peut recevoir que les émissions de l'appareil 4.

On considère que la majorité, sinon toutes, les liaisons dans un réseau TDMA domestique sont bidirectionnelles. On considérera dans le présent exemple que chaque appareil du réseau utilise la même bande de fréquence radio. De par la nature de ces liaisons, chaque appareil est tantôt émetteur et tantôt récepteur (fonctionnement dit 'half-duplex' en langue anglaise). Quand il n'émet pas, un appareil doit successivement écouter différents autres interlocuteurs. Il ne peut pas pour cela mettre en oeuvre les techniques classiques de synchronisation sur un signal continu dans le temps à l'aide d'asservissement mais doit se synchroniser rapidement à la volée sur n'importe quel paquet reçu au début de chaque fenêtre. Cette synchronisation paquet est d'autant plus difficile que d'une part la bande passante du signal reçu est grande, ce qui ne laisse pas de place à des implémentations de synchronisation sophistiquées, et d'autre part que la source d'émission du paquet est susceptible de changer à chaque fenêtre. Cette synchronisation quasi instantanée doit s'adapter à chaque fois à des niveaux de puissance, des écarts de fréquence porteuse et écarts de positionnement temporels différents.

Il peut être nécessaire de devoir transmettre à partir d'un appareil du réseau une horloge système à tous les autres appareils du réseau. Par exemple, un réseau sans fil interconnectant des réseaux câblés de type IEEE1394, c'est-à-dire un pont sans fil IEEE1394 doit transmettre à partir d'un appareil en connexion avec le noeud IEEE1394 appelé " net cycle master " une horloge 8 KHz. Les spécificités de la transmission de cette horloge dans le cadre de réseaux câblés interconnectés par des liaisons sans fil font l'objet d'une demande de brevet français déposée au nom de la Demanderesse le même jour que la présente demande et portant le numéro 98 04982.

Afin de relâcher ces contraintes drastiques en matière de synchronisation, le caractère statique de la topologie du réseau est avantageusement exploité. En effet, les caractéristiques de chaque tête d'émission et de réception des appareils du réseau ainsi que du canal de transmission ne changent que très lentement et l'enregistrement d'un nouvel appareil dans le réseau est un événement relativement rare. Cet apprentissage - la connaissance d'un nouveau venu - peut donc se permettre d'être d'une lenteur relative.
Pour permettre une synchronisation, on fait en sorte que l'attribution des fenêtres d'une trame soit connue de tous les appareils du réseau au début de chaque trame. Ainsi, un membre peut faire usage de sa connaissance a priori de la source d'émission en préparant les caractéristiques de synchronisation par interrogation de tables mises à jour lors d'écoutes précédentes. Par exemple, il commande juste au début de la fenêtre de réception le gain d'amplification de sa chaîne de réception à la valeur qu'il a utilisé antérieurement avec succès lors de la fenêtre que cette même source a précédemment occupée. Il en profitera pour remettre à jour par différence cette valeur pour l'avenir.

Chaque appareil du réseau doit avertir tout autre appareil de son intention d'utiliser de la bande passante, c'est-à-dire du nombre de fenêtres par trame qu'il souhaite utiliser dans le futur. Seuls les appareils communiquant directement avec l'appareil émettant cette information en sont avertis directement. Afin que cette information soit connue de tous, celle-ci est selon le présent exemple de réalisation répétée dans les fenêtres de contrôle transmis par ces appareils directement atteints et elle transite ainsi de proche en proche vers tous les appareils du réseau.

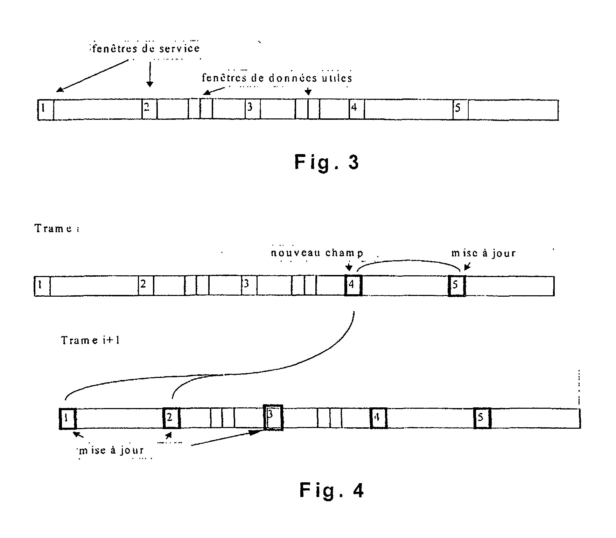

Le procédé conforme à l'invention comprend donc l'étape de propagation de proche en proche de l'information de partage du canal de transmission parmi les différents appareils qui le constituent.
La vitesse de propagation de ces informations dépend de la position relative des fenêtres de contrôle entre elles. Si celles-ci sont par exemple disposées dans la trame suivant l'ordre des numéros des appareils (voir fig. 3 décrite ci-dessous), l'information issue de l'appareil 1 sera instantanément transmise aux appareils joignables par la connexion sans fil qui pourront la répéter pendant leur fenêtre de contrôle au cours de la même trame.

La figure 3 est un exemple de l'attribution des fenêtres d'une trame aux cinq appareils de la figure 1 où les fenêtres de contrôle sont réparties dans de la trame dans l'ordre de leur numérotation. Les autres fenêtres du segment réservées aux données utiles sont réparties dans l'espace restant.

En revanche, une information issue d'une fenêtre de contrôle du dernier appareil émettant au cours de la trame ne pourra être transmise aux autres appareils qu'au plus tôt au cours de la prochaine trame. C'est par exemple le cas de l'appareil 5 dans le cas de la trame de la figure 3.
Dans un réseau a connectivité incomplète, il est possible d'attribuer une profondeur à chaque appareil du réseau. La profondeur d'un appareil est définie comme étant le nombre de trames nécessaires pour qu'une information émanant de cet appareil soit diffusée dans tout le réseau.
Dans l'exemple du réseau de la figure 1, si l'émetteur numéro 5 veut faire part de son intention de modifier le nombre de fenêtres occupées, il devra attendre 2 trames après la trame courante avant d'être sûr que tous les membres du réseau en seront avertis. Ce n'est donc qu'à partir de la troisième trame suivant la trame courante qu'il pourra effectivement mettre en oeuvre la nouvelle allocation. Il sera ainsi nécessaire de recalculer la profondeur de tous les membres du réseau chaque fois qu'un appareil est connecté au réseau ou déconnecté du réseau.
Les inconvénients de ce mécanisme de diffusion de l'information du partage de la trame par répétition de proche en proche sont d'une part l'augmentation du volume de données de contrôle dans la trame et d'autre part le temps non négligeable de changement de configuration de la trame.

Afin de ne pas enfler démesurément le volume d'information à répéter qui décrit quel appareil utilise quelle fenêtre de la trame, le format de cette information doit être concis: il n'est pas envisageable de diffuser la liste des appareils occupant successivement chaque fenêtre dans la trame pour chacune des fenêtres. Selon le présent exemple, on transmet le nombre de fenêtres occupées par chaque appareil, codé selon une convention commune aux appareils et un paramètre qui caractérise l'appareil qui a fait la demande. La convention de codage de cette liste permet alors à chaque appareil de déterminer la configuration de trame de manière non ambiguë.
Supposons par exemple que la trame contient 100 fenêtres de données et que les appareils 1, 2, 3, 4, 5 occupent respectivement 10, 50, 10, 2 et 5 fenêtres. On peut par exemple décider de placer les groupes de fenêtres par ordre des numéros des appareils (chaque appareil du réseau sans fil ayant un numéro spécifique) soit en l'occurrence les 10 fenêtres du membre 1, puis les 50 de 2, puis les 10 de 3, puis les 2 de 4 et enfin les 5 de 5. La répétition des informations dans chaque fenêtre de contrôle ne concerne alors qu'un champ de 5 fois 7 bits, chaque groupe de 7 bits donnant le nombre de fenêtres relatif à un appareil donné. Cette convention n'est donnée qu'à titre d'exemple, d'autres conventions pouvant également être utilisées.

La figure 4 illustre un exemple de la propagation selon l'invention de l'information relative à l'attribution des fenêtres à chaque appareil dans le réseau de la figure 1, une trame étant structurée de la façon illustrée par la figure 3. L'appareil 4 détermine une nouvelle attribution des fenêtres. Cette nouvelle attribution est diffusée dans la fenêtre de contrôle attribuée à l'appareil 4 dans la trame i, qui est la première trame de la figure 4. Etant donné que cette fenêtre de contrôle est transmise à l'appareil 5, c'est le premier appareil qui pourra diffuser l'information d'attribution mise à jour, et ce au cours de la trame i, à un ou plusieurs appareils avec lequel il est en liaison. La fenêtre de contrôle de l'appareil 4 lors de la trame i est également reçue par les appareils 1 et 2, mais ceux-ci ne pourront la propager que lors de la trame i+1. L'appareil 3 sera averti suite à la transmission de la fenêtre de contrôle de la trame i+1, et pourra transmettre l'information au cours de cette trame i+1.

Les données asynchrones et isochrones peuvent être transmises en mode réservation ainsi que décrit précédemment. Il existe une nuance entre la réservation pour la transmission des données isochrones et asynchrones: dans le cas de données asynchrones, la réservation est renégociée à chaque trame, alors que dans le cas des données isochrones, la réservation peut n'être négociée qu'à l'ouverture d'une connexion isochrone. Dans le cas des données asynchrones, lors du transfert de volumes importants de données, il est préférable d'utiliser un mode réservation. Par contre, dans le cas de faibles volumes de données, il peut être intéressant d'utiliser un mode contention. Il est donc intéressant de prévoir deux modes de transmission asynchrones, un mode avec réservation (imposant un temps de latence, mais plus efficace pour des volumes importants de données) et un mode à contention (efficace pour les faibles volumes de données, car la latence est réduite de même que la probabilité de collision). La trame peut être dans ce cas partagée en une zone réservée d'une part aux liaisons isochrones (et asynchrone avec réservation), et d'autre part en une zone disponible pour les liaisons asynchrones en mode contention. Il est par ailleurs envisageable qu'un appareil asynchrone n'ait pas à attendre la diffusion du nombre de paquets qu'il compte émettre incessamment, mais qu'il tente la transmission dès que possible dans la partie de la trame réservée au transfert asynchrone en mode contention. L'appareil destinataire en est nécessairement averti immédiatement puisqu'il est en contact radio direct avec l'appareil émetteur. Les cas de collision sont gérés par une détection de collision par l'appareil récepteur sous forme d'accusé de réception ou de non réception et répétition éventuelle après un nombre aléatoire de trames, procédé classique connu sous le nom " Aloha ". Afin de diminuer l'occurrence de ces collisions, il peut être bénéfique d'utiliser la version dite " slotted Aloha " en langue anglaise où les départs possibles de transmissions asynchrones sont régulièrement espacés. Dans tous les cas, il est nécessaire que la fonction réception des appareils du réseau sache estimer la qualité d'un paquet reçu, hypothèse vraisemblable dès lors qu'un décodage d'erreur par bloc est mis en oeuvre.

## Revendications

1. Procédé de transmission dans un réseau de transmission comportant des appareils (1, 2, 3, 4, 5) connectés au réseau, au moins certains appareils étant reliés par au moins une liaison sans fil, **caractérisé en ce que** :
- les communications sans fil sont effectuées selon un protocole de type TDMA isochrone, dans lequel une trame est divisée en fenêtres temporelles attribuées sur réservation à des appareils,
- l'attribution d'une fenêtre d'une trame à un appareil étant telle qu'elle peut être déduite par tout appareil du nombre de fenêtres réservées par trame par chaque appareil et d'au moins un autre paramètre qui identifie l'appareil qui a effectué la demande.

2. Procédé selon la revendication 1, **caractérisé en ce que** chaque trame comporte une fenêtre de contrôle par appareil relié à la partie sans fil du réseau, l'ordre des fenêtres de contrôle dans chaque trame étant connu des autres appareils de cette partie sans fil du réseau.

3. Procédé selon la revendication 2, **caractérisé en ce que** la position de chaque fenêtre de contrôle dans une trame est déterminée suite à une réinitialisation du réseau.

4. Procédé selon la revendication 3, **caractérisé en ce que** lors de l'enregistrement d'un appareil dans le réseau, un numéro d'ordre lui est attribué, l'ordre des fenêtres de contrôle étant déduit de l'ordre des numéros attribués aux appareils du réseau.

5. Procédé selon l'une des revendications 2 à 4, **caractérisé en ce qu'**une fenêtre de contrôle d'un appareil comporte le cas échéant un paquet de données de réservation de fenêtres.

6. Procédé selon la revendication 5, **caractérisé en ce qu'**un appareil recevant un paquet de données relatif à une réservation l'inclut dans sa prochaine fenêtre de contrôle.

7. Procédé selon l'une des revendications 2 à 5, **caractérisé en ce qu'**à chaque changement de topologie du réseau, chaque appareil transmet une signalisation de type écho dans sa fenêtre de contrôle, ladite signalisation étant destinée à être diffusée dans le réseau et à être renvoyée par chacun des autres appareils, l'appareil ayant émis la signalisation déterminant à partir des renvois de la signalisation par les autres appareils la durée de diffusion de sa demande de réservation dans le réseau.

8. Procédé selon la revendication 7, **caractérisé en ce qu'**un appareil ayant émis une demande de réservation de fenêtres ne met en oeuvre cette réservation qu'après une durée correspondant à la durée de diffusion de ses données de contrôle dans le réseau.

9. Procédé selon l'une des revendications précédentes, **caractérisé en ce qu'**une trame comporte en outre un intervalle de temps dont l'utilisation est régie par un procédé contentieux et réservé à une transmission asynchrone.

## Patentansprüche

1. Übertragungsverfahren in einem Übertragungsnetz mit an das Netz angeschlossenen Geräten (1, 2, 3, 4, 5), wobei wenigstens bestimmte Geräte über wenigstens eine drahtlose Strecke verbunden sind,
**dadurch gekennzeichnet, dass**
- die drahtlosen Kommunikationen gemäß einem isochronen TDMA-Protokoll erfolgen, in dem ein Rahmen in Zeitfenster aufgeteilt ist, die durch Reservierung Geräten zugeordnet sind,
- die Zuordnung eines Fensters eines Rahmens zu einem Gerät derart erfolgt, dass ein drahtloses Gerät diese Zuordnung aus der Anzahl von für den Rahmen reservierten Fenstern durch jedes Gerät und aus wenigstens einem anderen Identifizierungsparameter jedes drahtlosen Gerätes ableiten kann.

2. Verfahren nach Anspruch 1, **dadurch gekennzeichnet, dass** jeder Rahmen ein Steuerfenster je Gerät enthält, das mit dem drahtlosen Teil des Netzes verbunden ist, wobei die Reihenfolge der Steuerfenster in jedem Rahmen den anderen Geräten dieses drahtlosen Teils des Netzes bekannt ist.

3. Verfahren nach Anspruch 2, **dadurch gekennzeichnet, dass** die Lage jedes Steuerfensters in einem Rahmen nach einer Neuinitialisierung des Netzes ermittelt wird.

4. Verfahren nach Anspruch 3, **dadurch gekennzeichnet, dass** bei der Registrierung eines Gerätes in dem Netz diesem eine Nummer der Reihenfolge zugeordnet wird, wobei die Reihenfolge der Steuerfenster aus der Reihenfolge der den Geräten des Netzes zugeordneten Nummern abgeleitet wird.

5. Verfahren nach einem der Ansprüche 2 bis 4, **dadurch gekennzeichnet, dass** ein Steuerfenster eines Gerätes gegebenenfalls ein Datenpaket für die Reservierung der Fenster enthält.

6. Verfahren nach Anspruch 5, **dadurch gekennzeichnet, dass** ein Gerät, das ein Datenpaket für eine Reservierung empfängt, in seinem nächsten Steuerfenster eine Reservierung enthält.

7. Verfahren nach einem der Ansprüche 2 bis 5, **dadurch gekennzeichnet, dass** bei jeder Änderung der Topologie des Netzes jedes Gerätes eine Signalisierung vom Echotyp in seinem Steuerfenster überträgt, wobei diese Signalisierung dafür bestimmt ist, in dem Netz gesendet zu werden und durch jedes der anderen Geräte zurückgesandt zu werden, und das Gerät, das die Signalisierung gesendet hat, aus der Rücksendung der Signalisierung durch die anderen Geräte die Dauer der Sendung seiner Anforderung für die Reservierung in dem Netz ermittelt.

8. Verfahren nach Anspruch 7, **dadurch gekennzeichnet, dass** ein Gerät, das eine Anforderung für eine Reservierung der Fenster gesendet hat, diese Reservierung nur nach einer entsprechenden Dauer der Dauer der Sendung seiner Steuerdaten in dem Netz durchführt.

9. Verfahren nach einem der vorangehenden Ansprüche, **dadurch gekennzeichnet, dass** ein Rahmen außerdem ein Zeitintervall enthält, dessen Benutzung durch ein umstrittenes (contentious) Verfahren gesteuert wird und für eine asynchrone Übertragung reserviert ist.

## Claims

1. Process of transmission in a transmission network comprising transmission appliances, at least certain appliances being linked by wireless links, **characterized in that**:
- the wireless communications are performed according to an isochronous TDMA type protocol, in which a frame comprises time windows allocated on reservation to appliances,
- the allocating of a window of a frame to an appliance being performed in such a way that any wireless appliance can deduce this allocation from the number of windows reserved per frame by each appliance and from at least one other parameter identifying each wireless appliance.

2. Process according to Claim 1, **characterized in that** each frame comprises one control window per appliance linked to the wireless part of the network, the order of the control windows in each frame being known to the other appliances of this wireless part of the network.

3. Process according to Claim 2, **characterized in that** the position of each control window within a frame is determined subsequent to a reinitialization of the network.

4. Process according to Claim 3, **characterized in that**, when registering an appliance in the network, an order number is allocated to it, the order of the control windows being deduced from the order of the numbers allocated to the appliances of the network.

5. Process according to one of Claims 2 to 4, **characterized in that** a control window of an appliance comprises as appropriate a windows reservation data packet.

6. Process according to Claim 5, **characterized in that** an appliance receiving a data packet relating to a reservation includes it in its next control window.

7. Process according to one of Claims 2 to 5, **characterized in that**, on each change of topology of the network, each appliance transmits a signalling of echo type in its control window, the said signalling intended to be broadcast in the network and to be returned by each of the other appliances, the appliance which sent the signalling determining on the basis of the returns of signalling by the other appliances the duration of broadcasting of its request for reservation in the network.

8. Process according to Claim 7, **characterized in that** an appliance having sent a windows reservation request implements this reservation only after a duration corresponding to the duration of broadcasting of its control data in the network.

9. Process according to one of the preceding claims, **characterized in that** a frame furthermore comprises a time interval whose use is governed by a contentious process reserved for asynchronous transmission.
